# EUROPÄISCHE PATENTANMELDUNG

(11) **EP 1 168 030 A2**
(43) Veröffentlichungstag der Anmeldung: **02.01.2002**
(21) Anmeldenummer: 01115337.6
(22) Anmeldetag: 26.06.2001
(51) Int. Cl.: G02B 21/00

(54) **Verfahren und Anordnung zur Anpassung der lateralen und zeitlichen Auflösung eines Mikroskopbildes**

(30) Priorität: 29.06.2000 DE 10031746
(71) Anmelder: Leica Microsystems Wetzlar GmbH, 35578 Wetzlar (DE)
(72) Erfinder: Rühl, Helmut, 35396 Giessen (DE)
(74) Vertreter: Reichert, Werner F., Dr.

(57) **Zusammenfassung**

Das Verfahren zur Anpassung der lateralen und zeitlichen Auflösung eines Mikroskopbildes ermöglicht die Erfassung zeitlicher Änderungen des Bildinhaltes und schaltet aufgrund des Ermittlungsergebnisses auf einen anderen Übertragungsmodus um.
Die Anordnung zur Anpassung der lateralen und zeitlichen Auflösung eines Mikroskopbildes umfasst Mittel zur Erfassung der Änderungen des Bildinhaltes eines mikroskopischen Bildes. Ferner sind elektronische Mittel zur Begrenzung des Bildinhaltes vorgesehen. Weitere Mittel ermöglichen das automatische Umschalten auf einen passenden Übertragungsmodus. Das Mittel zum Erfassen der Änderung ist ein Mittel zur Bilddatenbearbeitung (22), das markante Bildstellen und deren Lage innerhalb eines festgelegten Bildfensters ermittelt. Ferner ist ein Vergleichselement (36) vorgesehen und mit einem Umschaltmittel (33) verbunden. Bei einer Abweichung im Vergleichselement (36) reduziert das Umschaltmittel (33) daraufhin die Bilddaten eines aktuellen Eingangsbildes entsprechend der Bandbreite und der Übertragungsgeschwindigkeit, um ein Livebild für das Video-Conferencing zu erzeugen.

## Beschreibung

Die Erfindung betrifft ein Verfahren zur Anpassung der lateralen und zeitlichen Auflösung eines Mikroskopbildes.

Ferner betrifft die Erfindung eine Anordnung zur Anpassung der lateralen und zeitlichen Auflösung eines Mikroskopbildes.

Lichtoptische Bildgeber, wie z.B. Mikroskope erzeugen die Bildergebnisse zweidimensional und ohne zeitliche Verzögerung. Es ist eine herkömmliche Verfahrensweise, dass die aufgenommenen Bilder zwecks analoger oder digitaler Weiterverarbeitung in elektronische Signale umgewandelt werden. Dabei tritt wegen der begrenzten Übertragungs-Bandbreite eine zusätzliche Begrenzung in lateraler und/oder zeitlicher Ausprägung ein. Diese Begrenzung tritt besonders bei großen Übertragungsstrecken (Telemikroskopie) oder bei Übertragungskanälen mit geringer Bandbreite auf.

Der Benutzer hat dabei die Wahlmöglichkeit, zwischen hoher lateraler Auflösung oder hoher Bildwechselfrequenz.

Das Patent US-A-5,216,596 offenbart ein Telepathologie-System. Eine Arbeitsstation ist an einem entfernten Ort aufgestellt und empfängt Bilder von einem Präparat (Gewebe), das mit einem Mikroskop untersucht wird. Die mikroskopischen Bilder werden mit einer herkömmlichen Video-Kamera aufgenommen und an dem entfernten Ort auf einem herkömmlichen Videomonitor dargestellt. Es erfolgt nach der Bildaufnahme eine Digitalisierung oder eine Kodierung der Bilddaten. Das hier vorgestellte System ist an analoge Übertragungsstrecken gebunden und kann in einem herkömmlichen digitalen Netzwerk nicht die benötigte Auflösung erreichen.

Das System zeigt keine Möglichkeit zur Reduzierung entsprechender Auflösungen, um somit eine Anpassung an die gerade zur Verfügung stehenden Bandbreiten zu ermöglichen.

Es ist Aufgabe der Erfindung, ein Verfahren zu schaffen, das benutzerfreundlich die Umschaltung zwischen unterschiedlichen Betriebsarten (Standbild oder Video-Conferencing) vornimmt.

Diese Aufgabe wird gelöst durch ein Verfahren, dass durch die folgenden Schritte gekennzeichnet ist:
a) Erfassen von Veränderungen des aktuell übertragenen Bildfensters über Veränderungen der Einstellungen des Mikroskops;
b) Umschalten auf einen Übertragungsmodus für Video-Conferencing;
c) Aufzeichnen der Zeit, die seit der letzten Änderung der Einstellungen des Mikroskops vergangen sind, und
d) Umschalten auf den Übertragungsmodus für Standbilder, wenn eine gewisse Zeitgrenze überschritten ist.

Eine weitere Aufgabe der Erfindung ist es, eine Anordnung zu schaffen, die die verfügbare Bandbreite der Übertragungskanäle optimal ausnutzt und anpasst, ohne dass hierzu Eingaben des Benutzers erforderlich sind.

Diese Aufgabe wird durch eine Anordnung gelöst, die dadurch gekennzeichnet ist, dass
- Mittel zur Erfassung der Änderungen des Bildinhaltes eines mikroskopischen Bildes,
- elektronische Mittel zur Begrenzung des Bildinhaltes aufgrund der von dem Mittel zur Erfassung der Änderung des Bildinhaltes gelieferten Daten, und
- Mittel zum automatischen Umschalten auf den zu den erfassten Änderungen des Bildinhaltes passenden Übertragungsmodus vorgesehen sind.

Ein Vorteil der Erfindung ist, dass nach dem Aufbau eines Bildes, das längere Zeit steht, keine Bildauffrischungen erforderlich sind. Hier kann die verfügbare Bandbreite der Übertragungskanäle voll ausgenutzt werden und ein Benutzer an der entfernt angeordneten Station kann das vom Mikroskop aufgenommene Bild mit der besten Auflösung betrachten. Will der Benutzer nun auf eine andere Stelle des Präparats verfahren, kann er dies z.B. von der entfernten Station aus tun. Er kann hierzu Abbildungsparameter, wie z.B. Vergrößerung, Scharfstellung und/oder Position des X/Y-Tisches entsprechend anpassen. Eine andere Möglichkeit besteht darin, dass die Mikroskopparameter manuell verändert werden und entsprechende Mittel am Ort des Mikroskops vorgesehen sind, die diese Änderung erfassen. Die Anordnung (beim automatischen Mikroskop) kann diese Änderungen ermitteln und stellt dann automatisch auf einen anderen Übertragungsmodus um, der bevorzugt an die Bandbreite des zur Übertragung benutzten Netzwerks angepasst ist.

Sobald Manipulationen am Objekt (Präparat) oder dem Abbildungssystem des Mikroskops vorgenommen werden, z. B. Änderung des Abbildungsmaßstabs oder des Bildausschnitts, reicht die für eine schnelle Bildübertragungsrate bei hoher Auflösung erforderliche Bandbreite nicht aus. Um für diesen Zeitraum höhere Bildwechselfrequenzen zu erreichen, wird gleichzeitig für kurze Zeit auf einen Teil der lateralen und/oder farblichen Auflösung verzichtet. Die Anordnung wird in Abhängigkeit vom Eingangsbild (vom Mikroskop aufgenommenem Bild) automatisch auf einen anderen Übertragungsmodus umgeschaltet.

Der Übertragungsmodus mit der größtmöglichen lateralen und farblichen Objekttreue wird als Standbildübertragung bezeichnet. Der Modus mit beschränkter lateraler und/oder farbliche Auflösung wird als Video-Conferencing bezeichnet.

Die Umschaltung zwischen Standbildübertragung und Video-Conferencing geschieht automatisch aufgrund der Erfassung der Objektbewegung bzw. der Änderung der Instrumenteneinstellung.

Diese Erfassung geschieht auf folgende Weise:
- Bei motorisch gesteuerten Bewegungen erfolgt die Meldung der Bewegung durch das steuernde System.
- Bei manueller Objektverschiebung erfasst ein Meßsystem die Veränderung.
- Die elektronischen Signale des Bildes werden auf inhaltliche Veränderung analysiert.

Wird durch eine der o.g. Methoden eine Veränderung festgestellt, schaltet das Übertragungssystem auf die Betriebsart, "Video-Confencing" (schneller Bildwechsel) um.

Bleibt der Bildinhalt über einen definierten Zeitraum unverändert, wird auf die Betriebsart "Standbild" (hohe Auflösung) umgeschaltet. Der definierte Zeitraum kann ein bestimmtes Zeitintervall sein, das in einem Timer installierbar ist.

In der Zeichnung ist der Erfindungsgegenstand schematisch dargestellt und wird anhand der Figuren nachfolgend beschrieben. Dabei zeigen:
- Fig. 1: eine systematische Darstellung eines Systems, bei dem die Erfindung Verwendung findet,
- Fig. 2: eine schematische Darstellung der Anordnung, die die Umschaltung zwischen den einzelnen Übertragungsmodi bei einem manuellen Mikroskop ermöglicht, und
- Fig. 3: eine schematische Darstellung der Anordnung, die die Umschaltung zwischen den einzelnen Übertragungsmodi bei einem automatischen Mikroskop ermöglicht.

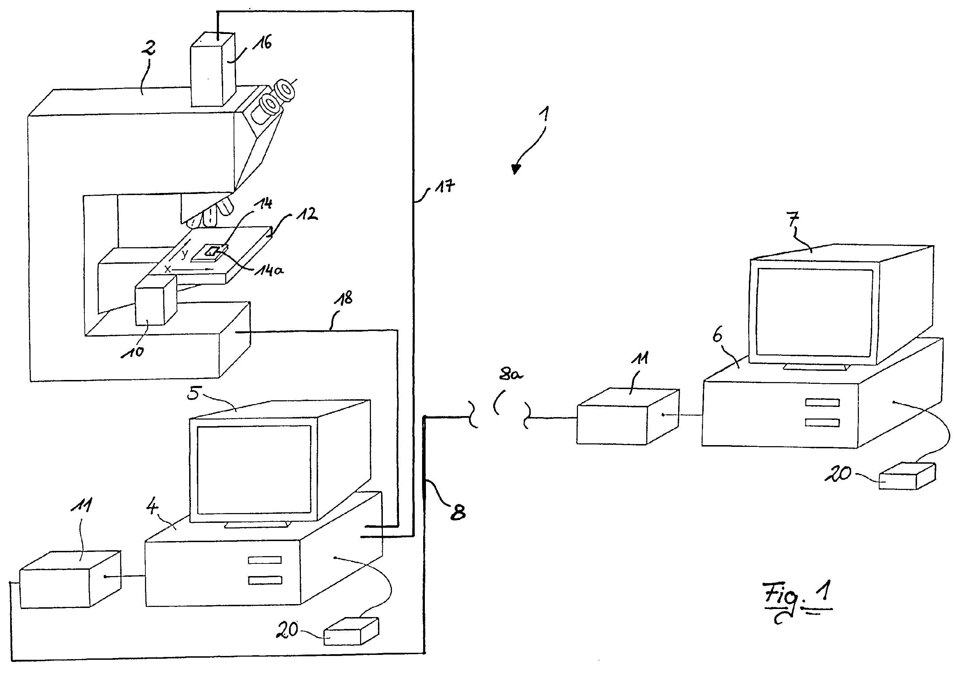

Das in Fig. 1 dargestellte System 1 besteht aus einem Mikroskop 2, das an einem Ort aufgestellt ist, an dem die zu untersuchenden Präparate (Gewebeschnitte) hergestellt werden. Der Ort ist in der Regel eine histologische oder pathologische Abteilung eines Krankenhauses. Dem Mikroskop 2 ist ein erster Rechner 4 mit einem Bildschirm 5 zugeordnet. Ein zweiter Rechner 6, ebenfalls mit einem Bildschirm 7, ist mit dem ersten Rechner 4 über ein herkömmliches Netzwerk 8 verbunden. In Fig. 1 ist das Netzwerk durch eine Verbindungsleitung dargestellt, die eine unterbrochene Stelle 8a besitzt, um besser zu verdeutlichen, dass der zweite Rechner 6 im Prinzip beliebig weit entfernt von dem ersten Rechner 4 installiert sein kann.

In dem hier dargestellten Ausführungsbeispiel ist das Mikroskop 2 als ein automatisches Mikroskop ausgebildet. Alle Abbildungsparameter des Mikroskops 2 können z.B. von dem zweiten Rechner 6 aus eingestellt und verändert werden. In diesem Falle besitzt das Mikroskop 2 entsprechende Motoren zur Einstellung der Parameter. In Fig. 1 ist ein Motor 10 dargestellt, der das Verschieben eines X/Y-Tisches 12 ermöglicht. Motoren für Veränderung des Abbildungsmaßstabes, das Verfahren des X/Y-Tisches 12 in Z-Richtung und/oder zur Fokussierung sind aus Gründen der Übersichtlichkeit nicht dargestellt. Für eine Fachmann ist jedoch die Anordnung und Verwendung dieser Motoren klar.

Auf dem X/Y-Tisch 12 ist ein Objektträger 14 mit einem darauf präparierten Präparat 14a angeordnet. Entsprechend der gewählten Vergrößerung wird ein Bildfenster (nicht dargestellt) abgebildet und von einer Kamera 16 aufgenommen. Die Kamera 16 kann als herkömmliche Video-Kamera oder Digital-Kamera ausgestaltet sein. Die Kamera 16 ist über eine Verbindung 17 mit dem ersten Rechner 4 verbunden. Zwischen dem ersten Rechner 4 und dem Mikroskop 2 besteht eine weitere Verbindung 18, über die Steuersignale an die entsprechenden Motoren gesendet werden. Die Steuersignale werden über das Netzwerk 8 von dem zweiten Rechner 6 an den ersten Rechner 4 übermittelt. Ebenso werden über das Netzwerk 8 die Bilddaten vom ersten Rechner 4 an den zweiten Rechner 6 übermittelt. Beide Rechner 4 und 6 können jeweils mit einem Modem 11 oder einer anderen digitalen Datenfernübertragung (DFÜ) versehen sein, das zum Verbindungsaufbau dient. Ferner ist mit jedem Rechner 4 und 6 eine Eingabeeinheit 20 für Benutzereingaben verbunden. Die Eingabeeinheit 20 kann als Maus, Tastatur oder als Sprachsteuereinheit ausgebildet sein.

Wie bereits oben erwähnt, dient der erste Rechner 4 in der Regel dazu, die Bilddaten vom Mikroskop 2 aufzunehmen und für den Transfer über das Netzwerk 8 in ein entsprechendes Datenformat zu bringen. Ferner kann vom ersten Rechner 4 auch eine Kompression der Bilddaten durchgeführt werden. Hinzu kommt, dass das Mikroskop 2 ebenfalls noch mit Positionsgebern (nicht dargestellt) ausgestattet ist, die an den ersten Rechner 4 Signale liefern, die über die X-, Y- und Z-Position des X/Y-Tisches 12 Information liefern. Ferner ist der erste Rechner 4 auch für den Empfang der Daten vom zweiten Rechner 6 für die Steuerung des Mikroskops 2 sowie deren Umsetzung in entsprechende Steuersignale zuständig.

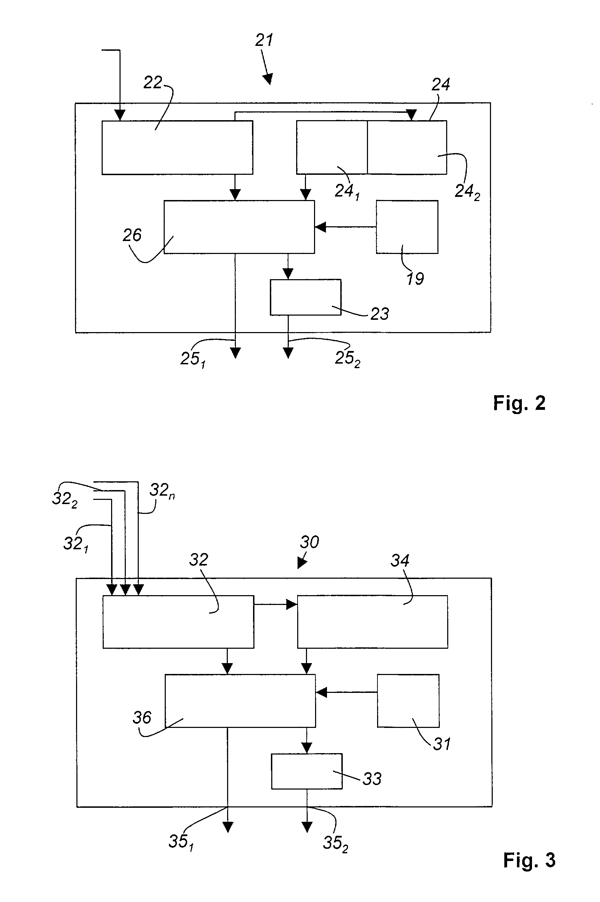

Fig. 2 ist eine schematische Darstellung einer Anordnung 21, die die Umschaltung zwischen den einzelnen Übertragungsmodi bei einem manuellen Mikroskop ermöglicht. Wie bereit oben erwähnt, ermittelt ein rein manuelles Mikroskop 2 die Veränderungen der Mikroskopeinstellungen an Hand der aufgenommenen Bildinhalte. Die Anordnung 21 umfasst ein Mittel zur Bilddatenbearbeitung 22, einen Zwischenspeicher 24, ein Vergleichselement 26, einen Timer 19 und ein Umschaltmittel 23. Von der Kamera erhält das Mittel zur Bilddatenbearbeitung 22 ein Eingangsbild. Hierzu werden z.B. markante Bildstellen und deren Lage innerhalb eines festgelegten Bildfensters (nicht dargestellt) ermittelt. Diese Daten werden dem Zwischenspeicher 24 zugeführt. Der Zwischenspeicher 24 ist in einen ersten und zweiten Teil 24₁ und 24₂ unterteilt. In dem ersten Teil 24₁ sind die Daten eines Vorgängerbildes gespeichert und im zweiten Teil 24₂ sind die Daten des aktuellen Bildes gespeichert. Im Vergleichselement 26 werden die Daten des aktuellen und des Vorgängerbildes verglichen. Dabei wird ein vom Timer 19 vorgegebenes Zeitintervall berücksichtigt. Werden im Vergleichselement 26 keine Abweichungen festgestellt, wird über einen ersten Ausgang 25₁ der Anordnung 20 ein Signal gesendet, dass weiterhin ein Standbild übertragen werden soll. Bei einer Abweichung wird ein Signal an das Umschaltmittel gesendet, das daraufhin die Bilddaten des Eingangsbildes entsprechend der Bandbreite und der Übertragungsgeschwindigkeit reduziert, um ein Livebild für das Video-Conferencing zu erzeugen. Über einen zweiten Ausgang 25₂ der Anordnung 20 wird das Livebild ausgegeben.

Fig. 3 ist eine schematische Darstellung einer Anordnung 30, die die Umschaltung zwischen den einzelnen Übertragungsmodi bei einem automatischen Mikroskop 2 ermöglicht. Die Anordnung 30 umfasst ein Mittel zur Positionsdatenverarbeitung 32, einen Zwischenspeicher 34, ein Vergleichselement 36, einen Timer 31 und ein Umschaltmittel 33. Das Mittel zur Positionsdatenverarbeitung 32 besitzt mehrere Eingänge 32₁, 32₂, 32ₙ, die Signale von der Position des X/Y Tisches 12, der Vergrößerung und der Scharfstellung liefern. Nach der Verarbeitung sind diese Daten für die Position eines Bildfensters repräsentativ. Diese Daten werden dem Zwischenspeicher 34 zugeführt. Im Vergleichselement 36 werden die Daten des aktuellen und des Vorgängerbildes, die im Zwischenspeicher 34 abgelegt sind, verglichen. Dabei wird ein vom Timer 31 vorgegebenes Zeitintervall berücksichtigt. Werden im Vergleichselement 36 keine Abweichungen festgestellt, wird über einen ersten Ausgang 35₁ der Anordnung 30 ein Signal gesendet, dass weiterhin ein Standbild übertragen werden soll, bzw. keine weitere Übertragung eines Standbildes notwendig ist. Bei einer Abweichung wird ein Signal an das Umschaltmittel 33 gesendet, das daraufhin die Bilddaten des Eingangsbildes entsprechend der Bandbreite und der Übertragungsgeschwindigkeit reduziert, um ein Livebild für das Video-Conferencing zu erzeugen. Über einen zweiten Ausgang 35₂ der Anordnung 30 wird das Livebild ausgegeben.

Die Erfindung wurde in Bezug auf eine besondere Ausführungsform beschreiben. Es ist jedoch selbstverständlich, dass Änderungen und Abwandlungen durchgeführt werden können, ohne dabei den Schutzbereich der nachstehenden Ansprüche zu verlassen.

### Bezugszeichenliste

- 2: Mikroskop
- 4: erster Rechner
- 5: Bildschirm
- 6: zweiter Rechner
- 7: Bildschirm
- 8: Netzwerk
- 10: Motor
- 11: Modem
- 12: X/Y-Tisches
- 14: Objektträger
- 14a: Präparat
- 16: Kamera
- 17: Verbindung
- 18: Verbindung
- 19: Eingabeeinheit
- 20: Anordnung
- 21: Timer
- 22: Mittel zur Bilddatenbearbeitung
- 23: Umschaltmittel
- 24: Zwischenspeicher
- 24₁: Zwischenspeicher erster Teil
- 24₂: Zwischenspeicher zweiter Teil
- 25₁: erster Ausgang
- 25₂: zweiter Ausgang
- 30: Anordnung
- 31: Timer
- 32: Mittel zur Positionsdatenverarbeitung
- 32₁, 32₂, 32ₙ: mehrere Eingänge
- 33: Umschaltmittel
- 34: Zwischenspeicher
- 35₁: erster Ausgang
- 35₂: zweiter Ausgang
- 36: Vergleichselement

## Patentansprüche

1. Verfahren zur Anpassung der lateralen und zeitlichen Auflösung eines Mikroskopbildes, **gekennzeichnet durch** die folgenden Schritte:
a) Erfassen von Veränderungen des aktuell übertragenen Bildfensters über Veränderungen der Einstellungen des Mikroskops (2);
b) Umschalten auf einen Übertragungsmodus für Video-Conferencing;
c) Aufzeichnen der Zeit, die seit der letzten Änderung der Einstellungen des Mikroskops (2) vergangen ist, und
d) Umschalten auf den Übertragungsmodus für Standbilder, wenn eine gewisse Zeitgrenze überschritten ist.

2. Verfahren nach Anspruch 1, **dadurch gekennzeichnet, dass** das Erfassen der Veränderungen des aktuellen Bildfensters mittels einer Bildanalyse aus dem Vergleich zweier zeitlich nacheinander aufgenommener Mikroskopbilder erfolgt.

3. Verfahren nach Anspruch 1, **dadurch gekennzeichnet, dass** die Veränderungen des aktuellen Bildfensters mittels eines automatischen Vergleichs der Position des Bildfensters zweier zeitlich nacheinander aufgenommener Mikroskopbilder erfolgt.

4. Verfahren nach Anspruch 1, **dadurch gekennzeichnet, dass** bei einem automatischen Mikroskop die zur Verstellung der Mikroskoparameter erforderlichen Signale erfasst werden und an Hand der Signale ermittelt wird, ob auf einen anderen Übertragungsmodus umgeschaltet wird.

5. Verfahren nach Anspruch 1, **dadurch gekennzeichnet, dass** bei einem automatischen Mikroskop mit manuellen Verstellmöglichkeiten die Veränderungen im Bildfenster in Abhängigkeit von der Zeit registriert werden, und an Hand der Veränderungen als Funktion der Zeit ermittelt wird, ob auf einen anderen Übertragungsmodus umgeschaltet wird.

6. Anordnung zur Anpassung der lateralen und zeitlichen Auflösung eines Mikroskopbildes **dadurch gekennzeichnet, dass**:
• Mittel zur Erfassung der Änderungen des Bildinhaltes eines mikroskopischen Bildes,
• elektronische Mittel zur Begrenzung des Bildinhaltes aufgrund der von dem Mittel zu Erfassung der Änderung des Bildinhaltes gelieferten Daten, und
• Mittel zum automatischen Umschalten auf den zu den erfassten Änderungen des Bildinhaltes passenden Übertragungsmodus vorgesehen sind.

7. Anordnung nach Anspruch 7, **dadurch gekennzeichnet, dass** das Mittel zum Erfassen der Änderungen des Bildinhaltes ein Mittel zur Bilddatenbearbeitung (22) umfasst, das markante Bildstellen und deren Lage innerhalb eines festgelegten Bildfensters ermittelt.

8. Anordnung nach Anspruch 7, **dadurch gekennzeichnet, dass** das Mittel zum Erfassen der Änderungen des Bildinhaltes ein Mittel zur Positionsdatenverarbeitung (32) ist, wobei das Mittel zur Positionsdatenverarbeitung (32) mehrere Eingänge (32₁, 32₂, 32ₙ) umfasst, die Signale von der Position eines X/Y Tisches (12), der Vergrößerung und der Scharfstellung des Mikroskops (2) liefern.

9. Anordnung nach Anspruch 7 oder 8, **dadurch gekennzeichnet, dass** ein Timer (21, 31) vorgesehen ist, der mit einem Vergleichselement (26, 36) verbunden ist, wobei das Vergleichselement (26, 36) aufgrund eines bestimmten Zeitintervalls des Timers (21, 31) und des Ergebnisses des Vergleichs weiterhin ein Standbild an einem ersten Ausgang (25₁, 35₁) liefert.

10. Anordnung nach Anspruch 7 oder 8, **dadurch gekennzeichnet, dass** das Vergleichselement (26, 36) mit einem Umschaltmittel (23, 33) verbunden ist, das bei einer Abweichung im Vergleichselement (26, 36) das Umschaltmittel (23, 33) daraufhin die Bilddaten eines aktuellen Eingangsbildes entsprechend der Bandbreite und der Übertragungsgeschwindigkeit reduziert, um ein Livebild für das Video-Conferencing zu erzeugen.
